# EUROPEAN PATENT SPECIFICATION

(11) **EP 0 910 711 B1**
(45) Date of publication and mention of the grant of the patent: **21.05.2003**
(21) Application number: 97932071.0
(22) Date of filing: 24.06.1997
(51) Int. Cl.: E02D 29/12, F24D 10/00

(54) **DISTRICT HEATING SYSTEM**
FERNWÄRMEEINRICHTUNG
INSTALLATION DE CHAUFFAGE CENTRALISEE

(30) Priority: 08.07.1996 SE 9602692
(43) Date of publication of application: 28.04.1999
(73) Proprietor: Hyvönen, Heimo, 515 34 Viskafors (SE)
(72) Inventor: Hyvönen, Heimo, 515 34 Viskafors (SE)
(74) Representative: Lautmann, Kurt O.
(86) International application number: SE9701128
(87) International publication number: WO98001629

(56) References cited:
- DE-A- 3 244 374
- FR-A- 2 098 919
- SE-A- 8 703 439
- SE-B- 458 865
- US-A- 3 263 577

## Description

The present invention relates to a district heating system generally consisting of a heating plant and a pipe system laid within a community. The pipe system is general situated below the road surface and requires a number of service units along its extension. These service units may be of two different types. One type may be a service unit that, together with a second service unit, is able to close off certain section of piping for repair or connection. Such service units are also provided with pipe systems for exhausting liquid and air. The other type of service unit has only one purpose and that is to tap off liquid and to deaerate. The latter type of service unit is placed between two service units of the first type. All service units include a number of valves which must be operated by service personnel. For this reason shafts have been made in the road surface in the form of service chambers or descent wells enabling service personnel to descend into the shaft or well and operate the valves. When such work is being performed a part of the street must usually be closed off since the descent hatches are usually located in the actual road surface. It is thus a considerable drawback to have descent hatches located in the road surface ant it is also drawback to have valves located below a road surface since they may be mechanically affected by the traffic above.

The present invention aims in the first place to avoid descent below a road surface and in the second place to enable operation of valves in service units from ground level. According to the invention this problem is solved by placing the two types of service units below areas located a way from the road surface. A suitable location for said units is below a pavement. Lengthening the valve adjustment members by means of extension rods enables the valves to be manipulated from ground level, thus eliminating the need for descending into a shaft or well. If service units of the first type are placed below a surface other than road surface, both the pipes in a district heating system, consisting of supply and return pipes, must be diverted through the service unit situated below a different surface. Generally each piping system with return and supply pipes has a curved extension that can be laid in such a manner as to fit the first type of service unit below a surface other than the road surface. As regards the second type of service unit, used only for deaeration and removing flow liquid, two branch pipes are arranged leading to this second type. Pipes for deaeration or supply of air and flow liquid can be arranged from these branch pipes, either on the upper or lower side. It is advisable to provide each of the two exhaust pipes with a valve and also to connect the two drainpipes to a common drainpipe which may also be provided with a valve, preferably of stainless material, and which suitably has a connection to a gulley communicating with a surface water pipe.

In a service station of the first type having cut-off valves, a pipe system is also arranged that can tap flow liquid and air from the supply pipe and return pipe on each side of the cut-off valves. The pipes are provided with valves and connected to a drainage system and a gulley which in turn communicates with a surface water pipe. In a service unit of the first type it is also advisable to arrange a pipe system that carries flow liquid from one side of a valve to a pipe on the other side of both valves. This allows the hot flow liquid to be tapped, eliminating the necessity of tapping the flow liquid in a discharge pipe.

The object of the invention is also to avoid personnel having to descend into a shaft and this is achieved by means of a peripheral wall, which may vary but is preferably circular, arranged between the piping level and the ground level above. The bottom of this peripheral wall will surround all valves, and operating members for the various valves are provided with extension members reaching all the way to the ground level above. A pipe is suitable arranged around each extension member, its upper end being provided with a closure so that each member has a protected space for movement. The enclosed peripheral space is filled with foam plastic, thus preventing damp and water from reaching the valves below, and also providing thermal insulation. A sealing cover is placed at the top of the peripheral wall, above the foam plastic, the pipes for the extension members protruding through this cover. Each extension member may be provided with a knob at its upper end and a key at its lower end which fits a valve cock. A movable ring isarranged in the ground above the peripheral wall, for an outer metallic cover.

Drainage is arranged between the ring and the peripheral wall, by which meant that damp and liquid are prevented from reaching the space within the periphal wall. A service person is then able to stand upright at ground level and turn the extension member, which is the nature of a rod, to the desired position to cooperate with the valve.

The invention thus provides the advantages that the valves in the service units are not subjected to damaging forces from traffic above and also that service personnel need not descend into a shaft but can stand in an upright position on the ground and this ground area need not be closed off since only a circular cover of moderate dimensions is being removed.

Further features of the present invention are revealed in the appended claims.

The present invention will be described in more detail with reference to the accompanying drawings in which,
- Figure 1: shows a pipe system situated below the surface of a road, said pipe system making a deviation beneath a pavement and passing through a service unit of a first type. Said service unit is connected to a gulley and to a surface water pipe,
- Figure 2: shows a service unit of the second type, i.e. for exhausting flow liquid and air and two branch pipes are arranged for this purpose to the service unit which is in turn connected to a gulley and surface water pipe,
- Figure 3: shows a detailed view of a service unit of the second type,
- Figure 4: shows a service unit of the second type filled with foam plastic,
- Figure 5: shows how a service person is able to operate the valves in a service unit while standing erect on the ground, and
- Figure 6: shows the piping system in a service unit of the first type.

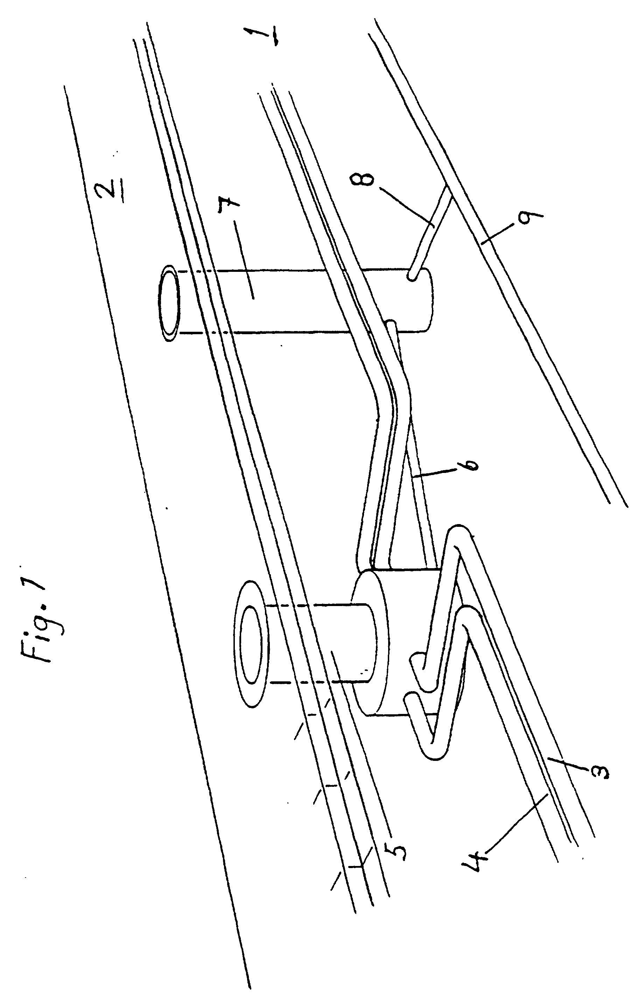

Figure 1 shows a road 1 below which a supply pipe 3 and a return pipe 4 are laid. These pipes are of the type used for carrying district heating. The pipes 3 and 4 are generally laid straight, but since service units located in the surface of the road are to be avoided the pipes must make a curve up to a first service unit 5, pass through this and then continue. The expansion loops are preferably utilized. The service unit 5 has a drainpipe 6 communicating with a gulley 7, which in turn has a drainpipe 8 to a surface water pipe. Both the first unit 5 and the gulley 7 are situated beneath a pavement 2.

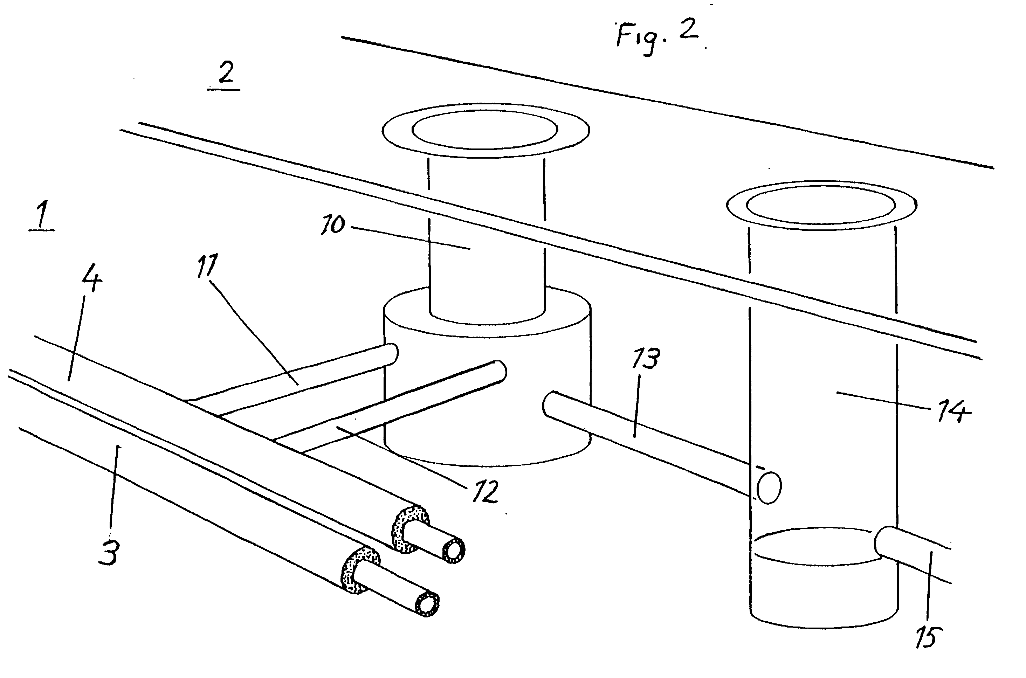

Figure 2 again shows the road 1 and the pavement 2. Beneath the road surface are two pipes 3 and 4 for transporting heat. The second type of service unit 10 is placed under a surface away from the road surface, as is also the cooperating gulley 14. The branch pipe 11 is connected to the return pipe 4 and the branch pipe 12 is connected to the supply pipe 3. A drainpipe 13 is arranged between the second type of service unit 10 and a gulley 14. The gulley 14 is also provided with a pipe 15 communicating with a surface water pipe.

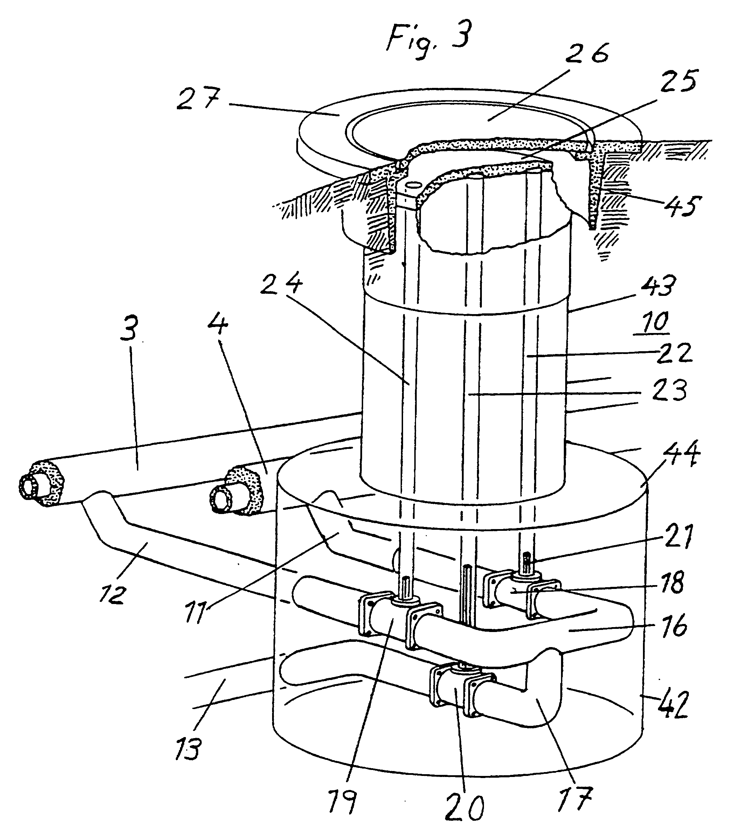

Figure 3 shows the second type of service unit 10 in more detail. The drawing shows clearly that the supply pipe 3 is connected to a branch pipe 12 and a return pipe 4 is connected to a branch pipe 11. These two branch pipes lead into the service unit 10. The housing of the service unit consist of two cylindrical pipes 42 and 43 which may be of any suitable material, metal or plastic. The two pipes are arranged one after the other and a plate 44 constitutes a connection element between the two pipes 42 and 43. In the lower cylindrical space the branch pipe 11 and 12 are connected to valves 18 and 19, respectively. The two valves 18 and 19 are in turn joined to a pipe 16 with an exhaust pipe 17 at its lower side. Said pipe communicates with valve which is in turn connected to the drainpipe 13. Each valve has a connection pin 21 and around each connection pin 21 a cylindrical tube 24 is arranged to reach to the upper edge of the pipe 43. The upper pipe 43 is sealed here by an inner cover 25 which may be of rubber or any other suitable materialsuch as plastic, and allows passage of the tubes 24. These are preferably closed when not in use. A cover ring 27, which is movable and designed to secure a metal cover 26, is arranged in the actual surface of the ground. The cover ring 27 has a downwardly directed peripheral flange 45 spaced from the envelope surface of the pipe 43. Drainage is arranged in this space so that no moisture or water can pass to the cylindrical spaces 42 and 43. A long rod can be inserted into each of the tubes 24, this rod being provided at its lower end with gripping means to cooperate with a connection pin 21. The rod extends so far at its upper end that a service person 29 is able to operate the valve below with the aid of a handle at the upper end of the rod.

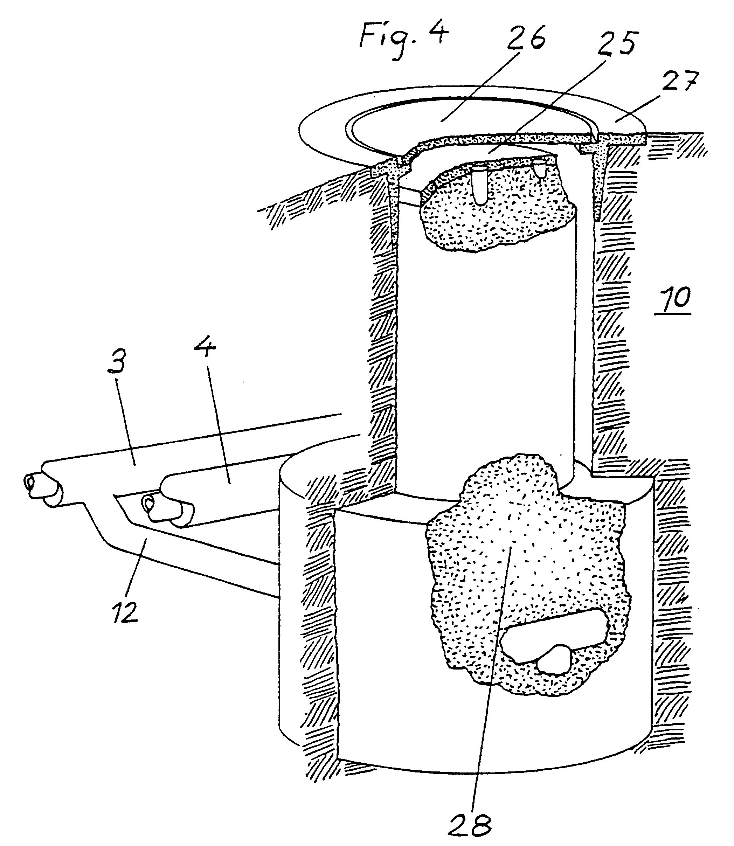

Figure 4 shows a second type of service unit 10 identical to that shown in Figure 3 where it is clear that the two cylindrical spaces 42 and 43 are filled with foam plastic 28, preferably polyurethane foam. All parts in the service unit 10 are thus protected from damp and liquid.

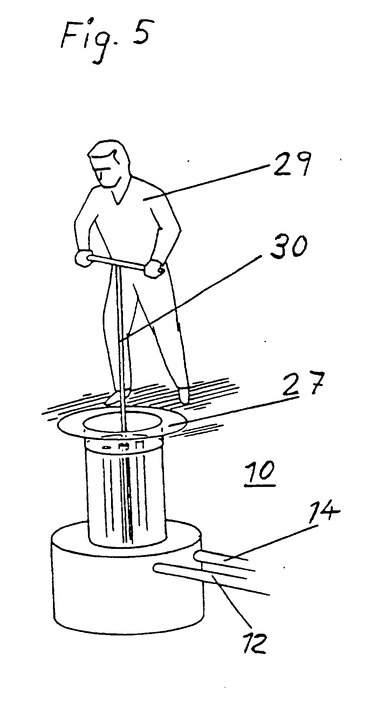

Figure 5 again shows the second service 10 provided with an operating tool 30 being manipulated by a service person 29. It is also quite dear that the service person can manipulated the valve standing erect and is thus not subjected to occupational injury.

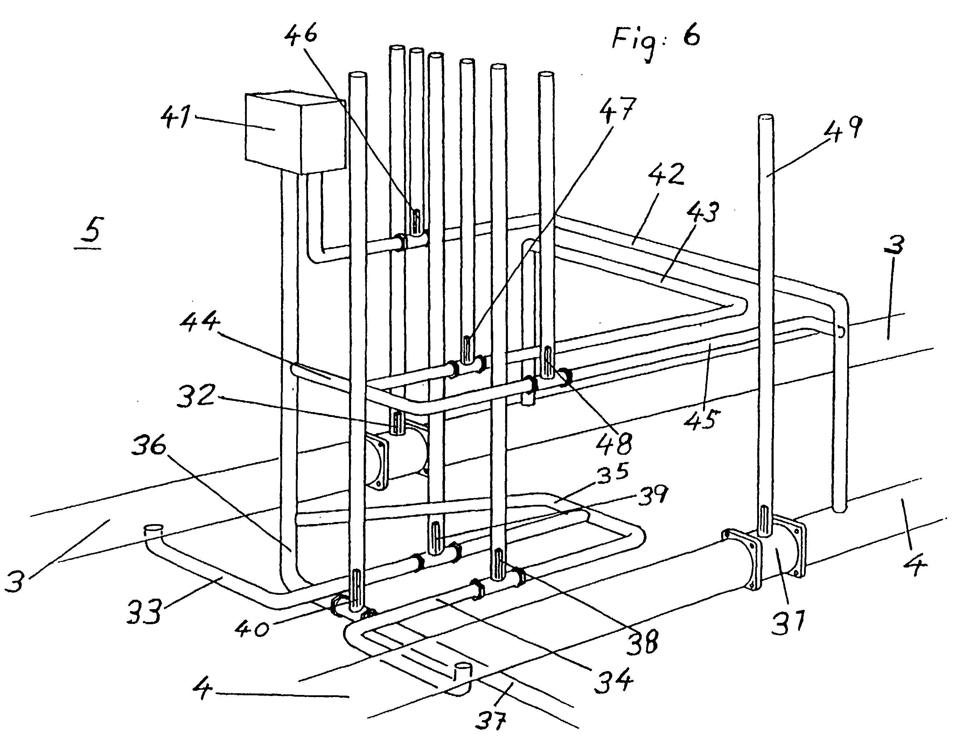

According to Figure 1 both the supply pipe 3 and the return pipe 4 pass through the first type of service unit 5 and inside this service unit are a number of pipes and valves which are shown without peripheral wall and in expanded state in Figure 6, to allow a clear view of structure of the service unit 5. The figure shows the supply pipe 3 and return pipe 4 with two tapping pipes 33 and 34 with valves 38 and 39, respectively, arranged on the lower sides. The valves 38 and 39 communicate with a drainpipe 35 and 36, respectively, passing via a valve 40 to a drainpipe 37 leading to a drain, and then to a surface water pipe. The two pipes 3 and 4 are provided with cut-off valves 31 and 32, respectively. On the right side of the cut-off valves a drainpipe 43 is arranged from the pipe 3 which, via a valve 47 and a pipe 44, is connected to the pipe 36. A pipe 42 leads from the upper side of the pipe 4. A drainpipe 45 is connected to said pipe 42 and communicates via valve 48 with the pipe 44 which in turn is connected to the pipe 36. A valve 40 is arranged between the pipes 36 and 37. If this valve is open, waste from the right-hand parts of the pipes 3 and 4 will pass out through the valve 40 and the pipe 37. Pipe 42 communicates with a pump 41 via a valve 46. If the valve 40 is closed and the valves 38 and 39 are open, flow liquid will be carried via the pipe 45 to the pipe 36 up to the pump which then pumps flow liquid via an open valve 46 and the pipe 42 to the right-hand part of the pipe 4. When the pump is not in use the ends of the connections are closed in some way. With the first type of service unit, therefore, the two pipes 3 and 4 can be closed and air and flow liquid can also be removed. A service unit of the first type described here must cooperate with a similar service unit situated some distance away and during repair work on the pipes the valves 32 and 31 must be closed in the identical service units. The pipe system described in Figure 6 is arranged in a housing of the type shown in Figure 1 and the housing is filled with polyurethane foam in exactly the same way as in the service unit according to Figure 4.

Thus, with the aid of two service units of the first type, a section pf piping can be closed off and emptied of flow liquid and air as well as it being possible to transfer flow liquid from one side of the cut-off valves so that no flow liquid need be drawn off into the surface water pipes.

It is clear from the above, therefore, that all valves in both types of service unit are arranged beneath a pavement or other ground surface and not beneath a road on which traffic runs. All valves and components in the service units are therefore free from mechanical influence. By using tubes 22, 23 and 24 and an adjustment tool 30, therefore, after a cover 26 has been removed, the valves can be operated from a level which, as can be seen in Figure 5, avoids occupational injury for the service person 29. By moving the service units from the road to a different ground surface the system described above achieves increased durability as well as facilitating servicing of the service units and thereby reducing costs for both the service units and their operation.

The supply and return pipes may have different dimensions and when the dimensions are rather large it is difficult to have both a supply pipe 3 and a return pipe 4 passing through one service unit 5. In this case the service unit 5 is preferably divided into two service parts, each with its own pipe, either supply or return pipe. In other respects the complete pipe system corresponds to that shown in Figure 6. With such large supply and return pipes it has been found that the valves 31 and 32 become so large and ungainly that they are difficult to operate. It may thus be suitable to arrange a gear transmission, e.g. a gear box, between the operating tool and valves. It is even feasible to have a small motor to drive the valves 31 and 32.

The pipe 13 may be adjusted to a suitable length in advance, but it is probably also advantageous to design the pipe so its length can be adjusted.

It is particularly advisable to close the pipe at the top with a tightly sealing cover having an end surface and a peripheral flange. The cover is suitably made of plastic but can of course any other suitable material may be used.

The unit 10 can also be used as a service unit for connection to a building, in which case the parts 16, 17, 20 and 13 are removed and the two valves 18 and 19 connected to the pipes leading into the property.

## Claims

1. A district heating system having supply and return pipes (3, 4) located under a road surface (1) and provided with one or more service units (5, 10) for deaeration, tapping off liquid and exposing sections of pipe, **characterized in that** all service units (5, 10) are situated at the side of a roadsurface, whereby each service unit (5, 10) has a vertical space extending from pipe level up to ground level, which is surrounded by a peripheral arrangement in the form of a closed wall and that the means (18, 19) for adjusting flow through, to or from said pipes are situated in the lower part of the space, whereby extension arrangements are provided, extending up to ground level which cooperate with means (18, 19), and whereby each space is filled with material (28) to prevent water and damp from collecting there.

2. A district heating system as claimed in claim 1, **characterized in that** the filler material (28) consists of foam plastic such as polyurethane foam.

3. A district heating system as claimed in one or more of the preceding claims, **characterized in that** the adjust means (18, 19) comprise valves with an adjustment rod (30).

4. A district heating system as claimed in claim 3, **characterized in that** a tubular space is arranged for each adjusting rod (30).

5. A district heating system as claimed in any of the preceding claims, **characterized in that** a branch pipe (11) from the supply pipe (3) and a branch pipe (12) from the return pipe (4) are arranged for a second type of service unit (10), both the branch pipes (11, 12) being connected via a valve (18 or 19, respectively) to a common drainpipe (13) in which a valve (20) is preferably arranged, preferably made of stainless material.

6. A district heating system as claimed in claim 5, **characterized in that** the drain pipe (13) is connected to a gulley (14) with a connection (15) to a surface water pipe (9), said connection preferably being located above the bottom of the gulley (14).

7. A district heating system as claimed in claim 5, **characterized in that** drainage of a branch pipe (11) can be activated from above.

8. A district heating system as claimed in any of the preceding claims, **characterized by** a first type of service unit (5) in which both the supply pipe (3) and the return pipe (4) pass through said service unit.

9. A district heating system as claimed in claim 8, **characterized in that** each of the pipes (3, 4) is provided with a cut-off valve (31, 32).

10. A district heating system as claimed in claim 9, **characterized in that** the supply pipe (3) and return pipe (4) each have a connection pipe connected to a drain pipe (13) with a valve (20).

11. A district heating system as claimed in claim 8, **characterized by** valve and pipe arrangements (36, 42) for the transfer of flow liquid from one side of valves (31, 32), to the other side of said valves (31, 32) preferably with the aid of a pump (41).

12. A district heating system as claimed in any of the preceding claims, **characterized in that** the length of the upper cylindrical pipe (43) is adjustable.

13. A district heating system as claimed in any of the preceding claims, **characterized in that** it comprises a second type of service unit (10), used for connection to a property, whereby the connection pipes (11, 12) from the supply and return pipes (3, 4) have continuation pipes to said property beyond enclosed valves (18, 19).

## Patentansprüche

1. Fernwärmeeinrichtung mit Zulauf- und Ablaufrohren (3,4), die sich unter einer Strassenoberfläche (1) befinden und mit einer oder mehreren Bedienungseinheiten (5,10) für Entlüftung, Abzapfen von Flüssigkeit und Freilegen von Rohrabschnitten ausgestattet sind, **dadurch gekennzeichnet, dass** alle Bedienungseinheiten (5,10) seitlich einer Strassenoberfläche angeordnet sind, wobei jede Bedienungseinheit (5,10) einen vertikal ausgerichteten Raum besitzt, der sich vom Rohrniveau bis zur Bodenoberfläche erstreckt und der von einer Randanordnung in Form einer geschlossenen Wand umgeben ist, und dass die Mittel (18,19) zum Einstellen des Flusses durch, zu oder von den genannten Rohren im unteren Teil des Raumes angeordnet sind, wobei Verlängerungsmittel vorgesehen sind, die sich bis zur Bodenoberfläche erstrecken und mit Mitteln (18,19) zusammenwirken, und wobei jeder Raum mit Material (28) gefüllt ist, um die Ansammlung von Wasser und Feuchtigkeit oder Schwitzwasser darin zu verhindern.

2. Fernwärmeeinrichtung nach Anspruch 1, **dadurch gekennzeichnet, dass** das Füllmaterial (28) aus geschäumten Kunststoff wie beispielsweise Polyurethan-Schaum besteht.

3. Fernwärmeeinrichtung nach einem der oder mehreren der voranstehenden Ansprüche, **dadurch gekennzeichnet, dass** die Einstellmittel (18,19) Ventile mit einer Einstellstange (30) umfassen.

4. Fernwärmeeinrichtung nach Anspruch 3, **dadurch gekennzeichnet, dass** ein rohrförmiger Raum für jede Einstellstange (30) vorgesehen ist.

5. Fernwärmeeinrichtung nach einem der voranstehenden Ansprüche, **dadurch gekennzeichnet, dass** ein Zweigrohr (11) vom Zulaufrohr (3) und ein Zweigrohr (12) vom Ablaufrohr (4) zu eine zweiten Art Bedienungseinheit (10) geführt werden, wobei beide Zweigrohre (11,12) über ein Ventil (18 bzw. 19) mit einem üblichen Entwässerungsrohr (13) verbunden sind, in welchem vorzugsweise ein Ventil (20) angeordnet ist, das vorzugsweise aus einem nichtrostendem Material hergestellt ist.

6. Fernwärmeeinrichtung nach Anspruch 5, **dadurch gekennzeichnet, dass** das Entwässerungsrohr (13) mit einem Gulli (14) mit einer Verbindung (15) zu einem Oberflächenwasserrohr (9) verbunden ist, wobei die genannte Verbindung vorzugsweise oberhalb des Bodens des Gullis (14) angeordnet ist.

7. Fernwärmeeinrichtung nach Anspruch 5, **dadurch gekennzeichnet, dass** das Drainieren eines Zweigrohrs (11) von oben in Gang gesetzt werden kann.

8. Fernwärmeeinrichtung nach einem der voranstehenden Ansprüche, **gekennzeichnet durch** eine erste Art von Bedienungseinheit (5), wobei sowohl das Zulaufrohr (3) als auch das Ablaufrohr (4) **durch** die genannte Bedienungseinheit geführt sind.

9. Fernwärmeeinrichtung nach Anspruch 8, **dadurch gekennzeichnet, dass** jedes der Rohre (3,4) mit einem Absperrventil (31,32) ausgestattet ist.

10. Fernwärmeeinrichtung nach Anspruch 9, **dadurch gekennzeichnet, dass** das Zulaufrohr (3) und das Ablaufrohr (4) jeweils ein Verbindungsrohr besitzen, das mit einem Entwässerungsrohr (13) mit einem Ventil (20) verbunden ist.

11. Fernwärmeeinrichtung nach Anspruch 8, **gekennzeichnet durch** Ventil- und Rohranordnungen (36,42) für den Transport von Strömungsflüssigkeit von einer Seite der Ventile (31,32) zur anderen Seite dieser Ventile (31,32), vorzugsweise mit Hilfe einer Pumpe (41).

12. Fernwärmeeinrichtung nach einem der voranstehenden Ansprüche, **dadurch gekennzeichnet, dass** die Länge des oberen zylindrischen Rohrs (43) einstellbar ist.

13. Fernwärmeeinrichtung nach einem der voranstehenden Ansprüche, **dadurch gekennzeichnet, dass** sie eine zweite Art von Bedienungseinheit (10) umfasst, die für die Verbindung mit einem Grundstück verwendet wird, wobei die Verbindungsrohre (11,12) von den Zulaufund Ablaufrohren (3,4) Verlängerungsrohre zu diesem Grundstück jenseits der eingeschlossenen Ventile (18,19) aufweisen.

## Revendications

1. Système de chauffage urbain ayant des tuyaux d'alimentation et de retour (3, 4) situés sous une surface de route (1) et pourvu d'un ou de plusieurs unités de service (5, 10) pour la désaération, la vidange de liquide et la mise à découvert de sections de tuyaux, **caractérisé en ce que** toutes les unités de service (5, 10) sont situées sur le côté d'une surface de route, chaque unité de service (5, 10) ayant un espace vertical s'étendant du niveau des tuyaux jusqu'au niveau du sol, lequel est entouré d'un arrangement périphérique sous forme d'une paroi fermée et **en ce que** les dispositifs (18, 19) pour le réglage du débit à travers, vers ou à partir desdits tuyaux sont situés dans la partie inférieure de l'espace, des arrangements d'extension étant prévus s'étendant jusqu'au niveau du sol lesquels coopèrent avec les dispositifs (18, 19) et chaque espace étant rempli de matériau (28) pour prévenir que l'eau et la vapeur ne s'y collectent.

2. Système de chauffage urbain selon la revendication 1, **caractérisé en ce que** le matériau de remplissage (28) consiste en du plastique mousse tel que la mousse de polyurétane.

3. Système de chauffage urbain selon l'une ou plusieurs des revendications susmentionnées, **caractérisé en ce que** les dispositifs de réglage (18, 19) comprennent des vannes avec une tige de réglage (30).

4. Système de chauffage urbain selon la revendication 3, **caractérisé en ce qu'**un espace tubulaire est agencé pour chaque tige de réglage (30).

5. Système de chauffage urbain selon l'une des revendications susmentionnées, **caractérisé en ce qu'**un tuyau de branchement (11) depuis le tuyau d'alimentation (3) et un tuyau de branchement (12) depuis le tuyau de retour (4) sont agencés pour un second type d'unité de service (10), les deux tuyaux de branchement (11, 12) étant raccordés via une vanne (respectivement 18 ou 19) à un tuyau de drainage commun (13) dans lequel est de préférence agencée une vanne (20), de préférence réalisée en un matériau inoxydable.

6. Système de chauffage urbain selon la revendication 5, **caractérisé en ce que** le tuyau de drainage (13) est raccordé à un gueulard (14) avec un raccordement (15) à un tuyau d'eau de ruissellement (9), ledit raccordement étant de préférence situé au-dessus du fond du gueulard (14).

7. Système de chauffage urbain selon la revendication 5, **caractérisé en ce que** le drainage du tuyau de branchement (11) peut être activé à partir d'en haut.

8. Système de chauffage urbain selon l'une des revendications susmentionnées, **caractérisé par** un premier type d'unité de service (5) dans lequel et le tuyau d'alimentation (3) et le tuyau de retour (4) passent à travers ladite unité de service.

9. Système de chauffage urbain selon la revendication 8, **caractérisé en ce que** chacun des tuyaux (3, 4) est pourvu d'une vanne de fermeture (31, 32).

10. Système de chauffage urbain selon la revendication 9, **caractérisé en ce que** le tuyau d'alimentation (3) et le tuyau de retour (4) chacun a un tuyau de raccordement raccordé à un tuyau de drainage (13) avec une vanne (20).

11. Système de chauffage urbain selon la revendication 8, **caractérisé par** des arrangements de vannes et de tuyaux (36, 42) pour le transfert du débit de liquide d'un côté des vannes (31, 32) à l'autre côté desdites vannes (31, 32) de préférence à l'aide d'une pompe (41).

12. Système de chauffage urbain selon l'une des revendications susmentionnées, **caractérisé en ce que** la longueur du tuyau cylindrique supérieur (43) est réglable.

13. Système de chauffage urbain selon l'une des revendications susmentionnées, **caractérisé en ce qu'**il comprend un second type d'unité de service (10), utilisé pour le raccordement à une propriété, les
